**Europäisches Patentamt**

**European Patent Office**

**Office européen des brevets**

(19)

(11) Veröffentlichungsnummer: **0 233 183 B1**

(12)

# EUROPÄISCHE PATENTSCHRIFT
## veröffentlicht nach Art. 158 Abs. 3 EPÜ

(45) Veröffentlichungstag der Patentschrift: **22.05.91**

(51) Int. Cl.⁵: **B60K 15/035**

(21) Anmeldenummer: **85905408.2**

(22) Anmeldetag: **28.10.85**

(86) Internationale Anmeldenummer:
**PCT/EP85/00570**

(87) Internationale Veröffentlichungsnummer:
**WO 86/02888 (22.05.86 86/11)**

(54) **VORRICHTUNG ZUR FÜLLBEGRENZUNG SOWIE ZUR BE- UND ENTLÜFTUNG VON BEHÄLTERN, INSBES. KRAFTSTOFFBEHÄLTERN VON KRAFTFAHRZEUGEN.**

(30) Priorität: **17.11.84 DE 3442149**

(43) Veröffentlichungstag der Anmeldung:
**26.08.87 Patentblatt 87/35**

(45) Bekanntmachung des Hinweises auf die
Patenterteilung:
**22.05.91 Patentblatt 91/21**

(84) Benannte Vertragsstaaten:
**DE FR GB IT SE**

(56) Entgegenhaltungen:
**DE-A- 2 046 562**
**FR-A- 2 490 162**
**US-A- 3 643 690**

(73) Patentinhaber: **Adam Opel Aktiengesellschaft Bahnhofsplatz 1 Postfach 1560 W-6090 Rüsselsheim(DE)**

(72) Erfinder: **SCHMIDT, Wilfried Kirchstrasse 22 W-6530 Bingen 13(DE)**

(74) Vertreter: **Bergerin, Ralf, Dipl.-Ing. et al Adam Opel Aktiengesellschaft Bahnhofplatz 1 Postfach 17 10 W-6090 Rüsselsheim(DE)**

EP 0 233 183 B1

## Beschreibung

Die Erfindung bezieht sich auf eine Vorrichtung zur Füllbegrenzung sowie zur Be- und Entlüftung von Behältern, insbesondere Kraftstoffbehältern von Kraftfahrzeugen, wobei ein Teil des Behältervolumens als Druckausgleichsraum im Hinblick auf Temperaturschwankungen dient, mit einer in den be- und entlüftbaren Einfüllstutzen einmündenden Be- und Entlüftungseinrichtung, die eine den noch als zulässig angesehenen max. Flüssigkeitsstand bestimmende Füllentlüftung und eine die Be- und Entlüftung des Druckausgleichsraumes übernehmende Betriebsentlüftung mit einer Schließvorrichtung aufweist, derart, daß die Betriebsentlüftung bei abgenommenem Tankdeckel durch Federwirkung verschlossen und bei aufgesetztem Tankdeckel durch diesen selbst entgegen der Federkraft geöffnet wird.

Die Erfindung geht also davon aus, daß es konstruktiv möglich ist, bei einem Betankungsvorgang die Betriebsentlüftung außer Kraft zu setzen. Der max. zulässige Kraftstoffspiegel im Kraftstofftank wird während des Betankungsvorganges ausschließlich durch die Füllentlüftung bestimmt. Auf diese Weise wird ein überfüllen des Kraftstoffbehälters vermieden; vielmehr wird ein ganz bestimmter Raum im Kraftstoffbehälter freigehalten, der bei einer späteren Ausdehnung des Kraftstoffes das Mehrvolumen aufnehmen kann. Einem Auslaufen von Kraftstoff durch die Entlüftungsleitung bei hohen Außentemperaturen, entsprechender Erwärmung und Volumenvergrößerung des Kraftstoffes vermag dadurch wirksam vorgebeugt zu werden.

Hinsichtlich des im vorstehenden geschilderten Standes der Technik wird auf die US-A-37 28 846 und die DE-C-27 52 645 verwiesen.

Aufgabe der Erfindung ist es, eine noch wirksamere und sicherere Füllbegrenzung beim Betanken mit einfachen Mitteln zu erreichen.

Das Problem wird erfindungsgemäß dadurch gelöst, daß zur Steuerung der Betriebsentlüftung ein in die Be- und Entlüftungsleitung integriertes Ventil dient, dessen Ventilkörper gegen Federwiderstand durch eine Kolbenstange betätigbar ist, und daß das Ventil so im Einfüllstutzen angeordnet ist, daß die Kolbenstange parallel oder im wesentlichen parallel zur Wandung des Einfüllstutzens innerhalb desselben zu liegen kommt und mit ihrem freien Ende bei abgehobenem Tankdeckel aus dem Einfüllstutzen herausragt.

Die Erfindung hat den Vorteil, daß mit Sicherheit ein Überfüllen des Behälters verhindert wird. Da es möglich ist, alle Teile - außer der Kolbenstange selbst - in Kunststoff zu fertigen, vermag die erfindungsgemäße Vorrichtung in einfacher Weise und kostensparend hergestellt zu werden. Ein weiterer Vorteil der Erfindung besteht darin, daß auf eine Kalibrierung der Überlaufleitung verzichtet werden kann. Die beim heute bekannten Stand der Technik übliche örtliche Verengung der Überlaufleitung von ca. 1-1,5 mm hat den Nachteil, daß einmal zu schnell Luft aus dem Tank entweicht, mit der Folge der Überfüllungsgefahr. Zum anderen kann sich die verengte Stelle leicht zusetzen, was eine Zerstörung des Behälters zur Folge hat. Schließlich kann bei extremer Erwärmung das Gas im Behälter nicht schnell genug entweichen. Dies führt zu einer nachteiligen bleibenden Verformung des Kraftstoffbehälters.

Alle diese bei bekannten Vorrichtungen der in Rede stehenden Art auftretenden Nachteile werden durch die vorliegende Erfindung wirksam vermieden.

In vorteilhafter Weiterbildung des Grundgedankens der Erfindung wird vorgeschlagen, das Ventil in einem Ventilgehäuse anzuordnen, welches seitlich an dem eine entsprechende Ausnehmung aufweisenden Einfüllstutzen an dessen oberen Ende befestigt ist, derart, daß das Ventil mit seiner Kolbenstange innerhalb des Einfüllstutzens möglichst nahe an der Innenwandung desselben zu liegen kommt. Auf diese Weise bildet das Ventil keinerlei Behinderung für den beim Betanken in den Einfüllstutzen eingeführten Zapfhahn.

Nach einer im vorgenannten Sinne sehr vorteilhaften Ausführungsform ist das obere Ende des Einfüllstutzens gegenüber dem sich an den Behälter anschließenden unteren Teil des Einfüllstutzens in Richtung auf eine Horizontalebene abgewinkelt ausgebildet, und die Kolbenstange des Ventils ist parallel oder im wesentlichen parallel zum oben liegenden Bereich der Wandung des abgewinkelten Einfüllstutzen-Endes angeordnet. Zweckmäßigerweise ist das Ventil am oben liegenden Bereich des Einfüllstutzens, unmittelbar vor der Knickstelle desselben, angeordnet.

Der Vorteil der vorgenannten Merkmale liegt darin, daß ein größtmöglicher konstruktiver Spielraum in dem den Einfüllstutzen umgebenden Bereich geschaffen wird, ohne hierdurch die Wirkungsweise der eingangs bezeichneten Vorrichtung zu gefährden oder zu beeinträchtigen. Es wird hierdurch möglich, den oben angegebenen Grundgedanken der Erfindung auf Behälter anzuwenden, deren Einfüllstutzen aus konstruktiven Gründen nicht geradlinig ausgeführt sein können.

Um das Ventil vor evtl. Beschädigungen durch den Zapfhahn zu schützen, wird vorgeschlagen, das Ventil durch eine Schutzwand gegenüber dem beim Betanken den Zapfhahn aufnehmenden Innenraum des Einfüllstutzens abzuschirmen.

In weiterer vorteilhafter Ausgestaltung der Erfindung besitzt das Ventil zwei Kammern, von denen eine erste Kammer durch eine Bohrung einerseits mit dem Innenraum des Einfüllstutzens und durch eine Leitung andererseits mit der Umgebung verbunden ist, und eine durch den Ventilkörper zum Innenraum des Einfüllstutzens hin verschließbare zweite Kammer ist durch einen Leitungskanal an die vom Behälter kommende und in das Ventilgehäuse einmündende Betriebsentlüftung angeschlossen.

Die die erste Kammer mit der Umgebung verbindende Leitung kann entweder unmittelbar in die Umgebungsatmosphäre oder - vorzugsweise - in einen Aktivkohlebehälter zur Kraftstoffverdampfungskontrolle einmünden. Durch letztere Variante wird gleichzeitig in vorteilhafter Weise den für das Jahr 1986 erwarteten Vorschriften über eine Kraftstoffverdampfungskontrolle Rechnung getragen.

Die erfindungsgemäße Konzeption der Vorrichtung zur Füllbegrenzung sowie zur Be- und Entlüftung von Behältern ermöglicht eine bevorzugte Ausführungsform, die sich dadurch auszeichnet, daß in das Ventilgehäuse ein an sich bekanntes sog. Roll-over-Ventil integriert ist.

Ein solches Roll-over-Ventil ist z.B. durch die DE-A-28 48 546 an sich bekannt geworden. Es verhindert bei extremen Schräg- bzw. Überkopflagen des Fahrzeuges - etwa nach einem Unfall - das Auslaufen von Kraftstoff aus dem Kraftstoffbehälter und wirkt damit einer möglichen Brandgefahr entgegen. Beim bisherigen Stand der Technik stellte das Roll-over-Ventil stets eine separate Einrichtung, unabhängig von der Füllbegrenzung bzw. von der Vorrichtung zur Be- und Entlüftung des Kraftstoffbehälters dar. Durch die vorliegende Erfindung ist es erstmals gelungen, diese beiden wichtigen Aggregate in Form eines integrierten Bauteils herzustellen und einzusetzen.

In weiterer Ausgestaltung der vorliegenden Erfindung wird für einen Behälter, insbesondere Kraftstoffbehälter, bei dem am Ende des Einfüllstutzens stirnseitig ein sog. Renksockel zur Aufnahme und dichtenden Halterung des Tankdeckels angeordnet ist, vorgeschlagen, daß der Renksockel das aus dem Einfüllstutzen herausragende Ende der Kolbenstange axial übergreift und nach außen hin abdeckt, und daß im Renksockel ein Gleitring drehbar gelagert ist, der an seiner rückwärtigen Stirnseite eine Aussparung mit einer Schrägfläche aufweist, die mit dem Ende der Ventil-Kolbenstange in Wirkverbindung steht, und daß der Gleitring durch den Tankdeckel - beim Auf- bzw. Abschrauben des Tankdeckels auf den (bzw. vom) Renksockel - betätigbar ist.

Der Vorteil dieses Gedankens besteht darin, daß die Ventil-Kolbenstange nicht mehr unmittelbar durch den Tankdeckel, sondern vielmehr indirekt über ein zusätzliches Teil, nämlich einen konstruktiv dem Einfüllstutzen zugeordneten Gleitring, betätigt wird. Die Kolbenstange ist hierbei durch den ihr Ende axial übergreifenden und abdeckenden Renksockel besser vor Beschädigungen geschützt als bei einem direkten Betätigen durch den Tankdeckel.

Üblicherweise besitzt ein auf einen Renksockel aufschraubbarer Tankdeckel Federzungen, die mit Schrägflächen und Rastausnehmungen im Renksockel kooperieren. In vorteilhafter Weiterbildung der Erfindung wird diese konstruktive Gegebenheit dahingehend aufgegriffen, daß der Gleitring Aussparungen für den Eingriff der Federzungen aufweist, derart, daß er durch die Federzungen während der Drehbewegung des Tankdeckels durch diesen in Drehung versetzbar ist.

Um Ventil, einschließlich Kolbenstange, wirksam vor eventuellen Beschädigungen durch den in den Einfüllstutzen eingeführten Zapfhahn zu schützen, wird desweiteren vorgeschlagen, an der Knickstelle zwischen oberem und unterem Teil des Einfüllstutzens innerhalb desselben einen - vorzugsweise durch eine Federstahlklappe verschließbaren - Trichter auszubilden, dessen oben liegender Bereich dann als Schutzwand gegenüber dem beim Betanken den Zapfhahn aufnehmenden Innenraum des Einfüllstutzens dient.

Zweckmäßigerweise kann hierfür der bei Verwendung bleifreien Kraftstoffs ohnehin im Einfüllstutzen erforderliche Trichter mit Federstahlklappe verwendet werden.

Die Erfindung ist nun anhand von Ausführungsbeispielen in der Zeichnung veranschaulicht und nachstehend näher erläutert. Es zeigt:

Fig. 1    einen Kraftstoffbehälter für ein Kraftfahrzeug, mit verschiedenen Entlüftungsleitungen (schematisch),

Fig. 2    - ebenfalls schematisiert - den Verlauf der Entlüftungsleitungen im Bereich des Einfüllstutzens eines Kraftstoffbehälters gem. Fig. 1,

Fig. 3    eine Ausführungsform einer Vorrichtung zur Be- und Entlüftung eines Kraftstoffbehälters, anhand eines Längsschnittes durch den oberen Teil des Einfüllstutzens,

Fig. 4    eine andere Ausführungsform einer Vorrichtung zur Be- und Entlüftung eines Kraftstoffbehälters, in Darstellung entsprechend Fig. 3, im Teilschnitt,

Fig. 5    den Gegenstand von Fig. 4, in Pfeilrichtung Y gesehen,

Fig. 6    einen Vertikalschnitt (Schnitt VI-VI in Fig. 7) durch ein Roll-over-Ventil gem. Fig. 4, in gegenüber Fig. 4 vergrößerter Darstellung,

Fig. 7    einen Schnitt längs der Linie VII-VII in Fig. 6,

Fig. 8     einen Längsschnitt durch den oberen Teil eines Einfüllstutzens eines Kraftstoffbehälters für Kraftfahrzeuge (Tankdeckel weggelassen),

Fig. 9     einen Gleitring nach Fig. 8, in Separatdarstellung, in Pfeilrichtung X betrachtet, und

Fig. 10     den Gleitring nach Fig. 9, in Draufsicht.

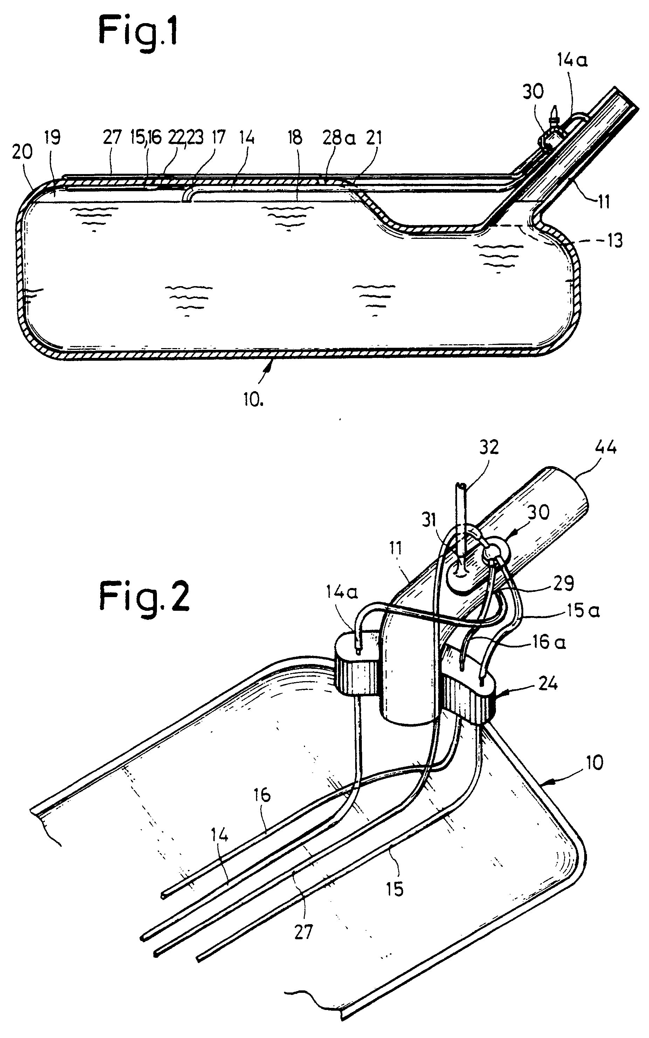

Nach Fig. 1 bezeichnet 10 einen Kraftstoffbehälter eines Kraftfahrzeugs, z.B. eines Personenkraftwagens. Der Kraftstoffbehälter 10 ist verhältnismäßig flach ausgebildet und weist einen nach oben ragenden Einfüllstutzen 11 auf, der in Fig. 1 nur schematisch gezeigt ist. Der Einfüllstutzen 11 ist in üblicher Weise durch einen (nicht gezeigten) Deckel mit Be- und Entlüftungsöffnung verschließbar. Als Füllentlüftung für den Kraftstoffbehälter 10, d.h. während des Betankens des Kraftstoffbehälters, dient zunächst im wesentlichen der Einfüllstutzen 11 selbst. Sobald der Flüssigkeitsstand das mit 13 bezifferte untere Ende des Einfüllstutzens 11 erreicht hat, kann die Entlüftung des Kraftstoffbehälters 10 nur noch durch eine Be- und Entlüftungseinrichtung erfolgen, die aus einer ersten Be- und Entlüftungsleitung 14 und drei, ein zweites Entlüftungssystem (sog. Betriebsentlüftung) bildenden, Entlüftungsleitungen 15, 16, 27 besteht. Die wesentliche Entlüftungsfunktion (Füllentlüftung) übernimmt hierbei zunächst die Leitung 14, deren innerhalb des Kraftstoffbehälters 10 befindliches Ende 17, wie Fig. 1 zeigt, etwa rechtwinklig nach unten abgebogen ist. Der Querschnitt der Füllentlüftungsleitung 14 ist so bemessen, daß die beim Einfüllvorgang aus dem Kraftstoffbehälter 10 durch die Flüssigkeit verdrängte Luft ungehindert durch diese Leitung 14 entweichen kann. Dieser praktisch ohne Verzögerungen stattfindende Einfüllvorgang dauert solange an, bis der Flüssigkeitsspiegel das Ende 17 der Füllentlüftungsleitung 14 erreicht hat. Dieser Flüssigkeitsspiegel ist in Fig. 1 mit 18 beziffert.

Über den Flüssigkeitsspiegel 18 hinaus soll der Kraftstoffbehälter 10 nicht weiter aufgefüllt werden. Es bleibt also ein Restvolumen frei, welches als Druckausgleichsraum, d.h. zur Aufnahme eines evtl. Mehrvolumens infolge temperaturbedingter Ausdehnung des Kraftstoffes dient. Die Größe dieses Restvolumens 19, in der Regel ca. 5 Liter, wird also durch die Füllentlüftungsleitung 14 bzw. deren nach unten abgebogenes Ende 17 bestimmt. Über die Füllentlüftungsleitung 14 ist der Kraftstoffbehälter 10 bei Verbrauch von Kraftstoff während des Betriebes des Fahrzeuges auch belüftet, um keinen Unterdruck mit der Gefahr einer Implosion entstehen zu lassen.

Die Forderung nach Entlüftung des Kraftstoffbehälters 10 besteht jedoch nicht nur bis zum Erreichen des max. Einfüll-Flüssigkeitsspiegels 18; vielmehr muß auch für eine ausreichende Entlüftung des als Druckausgleichsraum wirkenden Restvolumens 19 gesorgt werden. In dem Druckausgleichsraum 19 bildet sich nämlich aus Luft und Kraftstoffdämpfen ein Gasgemisch, dessen Druck bei entsprechend hohen Außentemperaturen auf erhebliche Werte ansteigen kann. Um solche Druckerhöhungen zu vermeiden, ist ein zweites Entlüftungsleitungssystem (sog. Betriebsentlüftung) vorgesehen, welches u.a. aus den bereits erwähnten Leitungen 15, 16 und 27 besteht. Die nach außen abgebogenen Enden der beiden Entlüftungsleitungen 15, 16 (vgl. hierzu Fig. 2) liegen unmittelbar unterhalb der oberen Begrenzungswand 20 des Kraftstoffbehälters 10. Die dritte Entlüftungsleitung 27 ist etwa in der Mitte der oberen Begrenzungswand 20 an der Stelle 28a an den Innenraum des Kraftstoffbehälters angeschlossen. Dadurch ist auch bei evtl. leichten Schräglagen des Fahrzeuges und dynamischen Kräften eine einwandfreie Entlüftung des Druckausgleichsraumes 19 gewährleistet.

Wie desweiteren aus Fig. 1 ersichtlich ist, verläuft die Füllentlüftungsleitung 14 in horizontaler Richtung zunächst innerhalb des Kraftstoffbehälters 10, tritt sodann an der Stelle 21 durch die obere Begrenzungswand 20 des Kraftstoffbehälters 10 hindurch nach außen, verläuft zunächst weiter horizontal, und mündet schließlich in einen aus Fig. 2 ersichtlichen und mit 24 bezeichneten Entlüftungsbehälter ein, der drei Kammern aufweist. Auch die beiden Betriebsentlüftungsleitungen 15 und 16 münden, wie Fig. 2 erkennen läßt, jeweils in eine Kammer des Entlüftungsbehälters 24. Die Füllentlüftungsleitung 14 setzt sich anschließend in einem vom Entlüftungsbehälter 24 ausgehenden Leitungsteil 14a fort, der schließlich bei 29 in den oberen Bereich des Einfüllstutzens 11 einmündet.

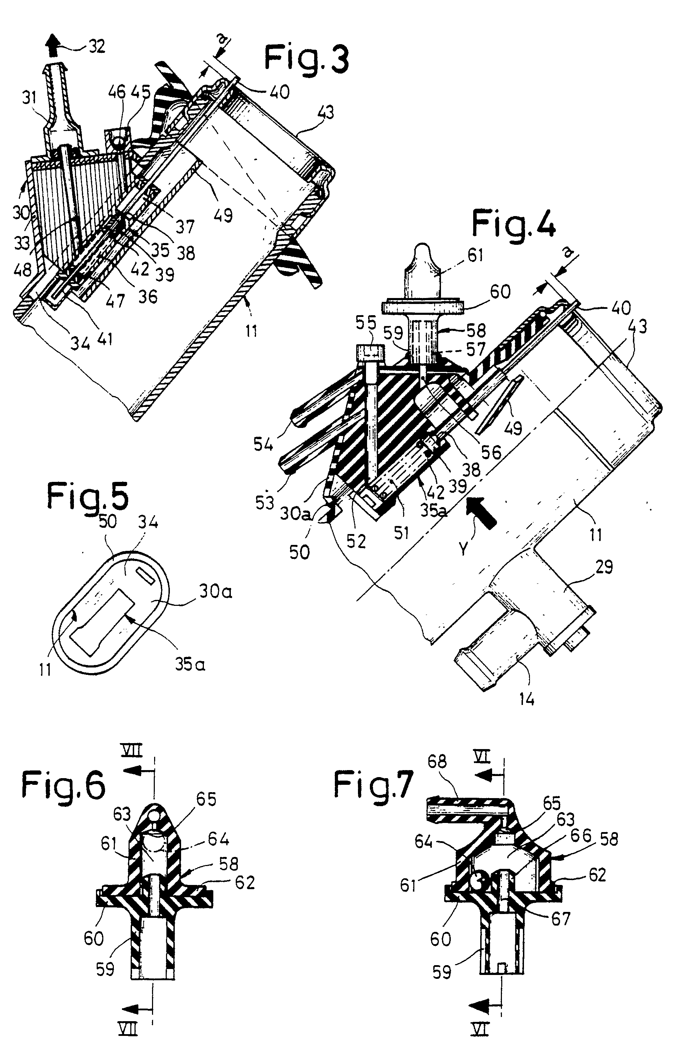

Entsprechende Fortsetzungen 15a bzw. 16a der Betriebsentlüftungsleitungen 15, 16 gehen ebenfalls vom Entlüftungsbehälter 24 aus, münden aber nicht unmittelbar in den Einfüllstutzen 11 ein, sondern vielmehr in ein insgesamt mit 30 bezeichnetes Ventil. Die dritte Betriebsentlüftungsleitung 27 mündet - unter Umgehung des Entlüftungsbehälters 24 - ebenfalls in das Ventil 30 ein. Integrierter Bestandteil des Gesamtventils 30 ist ein sog. Roll-over-Ventil 31, von dem eine Entlüftungsleitung 32 zu einem Aktivkohlebehälter (nicht gezeigt) führt. Aufbau und Funktionsweise des Roll-over-Ventils 31 sind im einzelnen aus Fig. 6 und 7 ersichtlich.

Eine Ausführungsform des Ventils 30 und dessen Funktionsweise sind aus Fig. 3 entnehmbar. Das Ventil 30 ist von einem Ventilgehäuse 33 umschlossen, welches im Bereich einer Ausnehmung 34 im Einfüllstutzen 11, diese dabei verschließend, seitlich an dem Einfüllstutzen 11 befestigt ist. Wesentlicher Teil des Gesamtventils 30 ist ein Kolbenventil 35 mit zwei Kammern 36 und 37. Bei 38 ist ein konischer Ventilsitz ausgebildet, der mit einem entsprechend konischen Ventilkörper 39 zusammenwirkt. Beidseitig des Ventilkörpers 39 setzt dieser sich in zwei Kolbenstangen 40 bzw. 41 verringerten Durchmessers fort. Innerhalb der ersten Kammer 36, die Kolbenstange 41 umgebend, ist eine Schraubendruckfeder 42 angeordnet, die den Ventilkörper 39 in den Ventilsitz 38 und damit in die Schließstellung des Ventils 35 drückt. Die in Fig. 3 rechtsseitig angedeutete zweite Kolbenstange 40 dient zur Betätigung des Ventilkörpers 39 entgegen der Kraft der Druckfeder 42. Die Kolbenstange 40 weist zu diesem Zweck eine derartige Länge auf, daß sie über das mit 43 bezifferte Ende des Einfüllstutzens 11 um das Maß a hinausragt. Wird nun der in Fig. 3 nicht gezeigte Tankdeckel auf den Einfüllstutzen aufgesetzt und mit diesem verschraubt, so wird hierbei gleichzeitig die Kolbenstange 40 entsprechend nach links verschoben, und der Ventilkörper 39 hebt vom Ventilsitz 38 ab. Das Ventil 35 ist dann geöffnet. Im geöffneten Zustand des Ventils 35 sind die beiden Kammern 36, 37 unmittelbar miteinander verbunden.

Um die im vorstehenden beschriebene Betätigung des Ventilkörpers 39 bzw. der Kolbenstange 40 durch den Tankdeckel 44 (s. Fig. 2) zu ermöglichen, besitzt der Tankdeckel eine Dichtung, die sich beim Aufschrauben des Tankdeckels nicht mitdreht. Die Kolbenstange 40 wird dann durch die Dichtung des Tankdeckels betätigt.

Das aus Fig. 3 ersichtliche Ventilgehäuse 33 besitzt desweiteren einen Leitungsanschluß 45, an den eine der drei aus Fig. 1 und 2 ersichtlichen Betriebsentlüftungsleitungen 15, 16 oder 27 angeschlossen werden kann. Zwei weitere derartige Anschlüsse sind in Fig. 3 der Einfachheit halber weggelassen worden. Innerhalb des Ventilgehäuses 33 führt eine Leitungsverbindung 46 vom Anschluß 45 zur zweiten Ventilkammer 37. Bei geschlossenem Ventil 35 (s. Fig. 3) ist somit eine Betriebsentlüftung des Kraftstoffbehälters 10 nicht möglich. Dieser Zustand ist bei geöffnetem Einfüllstutzen 11, d.h. während des Betankungsvorganges gegeben. Nach Beendigung des Betankungsvorganges wird der Deckel auf den Einfüllstutzen 11 aufgeschraubt, hierdurch das Ventil 35 geöffnet, und es kann nunmehr eine Betriebsentlüftung, d.h. eine Entlüftung des Reservevolumens 19 (Fig. 1) stattfinden.

Bei geöffnetem Einfüllstutzen 11 beschränkt sich die Entlüftung des Kraftstoffbehälters 10 dagegen lediglich auf die Füllentlüftung. Zu diesem Zweck ist die erste Ventilkammer 36 durch eine Bohrung 47 mit dem Innenraum des Einfüllstutzens 11 verbunden. Die durch die Füllentlüftungsleitung 14 bzw. 14a (vgl. Fig. 2) in den Einfüllstutzen 11 eingeleiteten Gase können so durch die Bohrung 47 in die erste Ventilkammer 36 und von dort durch einen Verbindungskanal 48 in die zum Aktivkohlebehälter führende Leitung 32 gelangen.

Fig. 3 macht weiterhin deutlich, daß das Ventil 35 unmittelbar benachbart zu der Innenwandung des Einfüllstutzens 11 und parallel zu derselben angeordnet ist, um den Betankungsvorgang möglichst wenig zu behindern. Um eine Beschädigung des Ventils 35 durch den in den Einfüllstutzen hineinragenden Zapfhahn zu vermeiden, ist eine Schutzwand 49 vorgesehen.

Das Ventilgehäuse 30 kann insgesamt aus Kunststoffmaterial bestehen und als Spritzgußteil ausgebildet sein. Dies ermöglicht eine besonders einfache und kostensparende Herstellung des Gesamtventils 35, da alle Leitungsanschlüsse (z.B. 45), Kanäle (z.B. 46, 48) und Ventilkammern 36, 37, einschließlich Ventilsitz 38 gleichzeitig mit der Herstellung des Ventilgehäuses 30 in einem Arbeitsgang und ohne anschließende Nacharbeitung gefertigt werden können.

Sofern auch der Einfüllstutzen 11 aus einem entsprechenden Kunststoffmaterial besteht, kann das Kunststoff-Ventilgehäuse 30 vorteilhafterweise mit dem Einfüllstutzen 11 verschweißt werden. Eine entsprechende Ausführungsform zeigt Fig. 4. Die Schweißverbindung zwischen dem dort mit 30a bezifferten Ventilgehäuse und dem Einfüllstutzen 11 ist mit 50 bezeichnet. Ein wesentlicher Unterschied zur Ausführungsform nach Fig. 3 besteht darin, daß das Ventil 35a nur eine einzige Kammer besitzt, die mit 51 bezeichnet ist. Die übrigen Bestandteile des Ventils 35a entsprechen der Ausführungsform nach Fig. 4 und sind mit entsprechenden Bezugszeichen versehen. Fig. 4 zeigt des weiteren, daß die Ventilkammer 51 über einen ersten Kanal 52 mit zwei Leitungsanschlüssen 53, 54 verbunden ist, in die jeweils eine Be- und Entlüftungsleitung der Betriebsentlüftung (nicht gezeigt) einmündet. Es kann sich hierbei z.B. um die aus Fig. 2 ersichtlichen und dort mit 15, 16 bzw. 15a, 16a bezeichneten Leitungen handeln. Ein dritter Anschluß für eine dritte Be- und Entlüftungsleitung (wie sie z.B. in Fig. 2 zu sehen und mit 27 beziffert ist), ist bei der Ausführungsform nach Fig. 4 nicht unmittelbar vorgesehen. Vielmehr ist der Kanal 52 an seinem oberen Ende durch eine Schraube 55 dichtend verschlossen. Anstatt der Schraube 55 kann jedoch ein Aufsatz mit einem dritten Leitungsanschluß für eine dritte Be- und Entlüftungsleitung (z.B. 27, Fig. 2) montiert werden.

Zur Füllentlüftung dient - entsprechend der Ausführungsform nach Fig. 2 - eine bei 29 in den Einfüllstutzen 11 mündende Be- und Entlüftungsleitung 14. Vom Inneren des Einfüllstutzens 11 gelangen die beim Betankungsvorgang anfallenden Gase in einen zweiten Kanal 56 des Ventilgehäuses 30a.

Die obere Verlängerung des zweiten Kanals 56 bildet ein Leitungsanschluß 57, auf den ein insgesamt mit 58 bezeichnetes Roll-over-Ventil aufgesteckt ist (vgl. auch Fig. 6 und 7). Das Roll-over-Ventil 58 besteht zweckmäßigerweise aus demselben Kunststoffmaterial wie das Ventilgehäuse 30a und kann dadurch - wie letzteres - ebenfalls durch Spritzgießen hergestellt sein. Außerdem wird vorteilhafterweise durch die beiden gleichartigen Materialien von Ventilgehäuse 30a einerseits und Roll-over-Ventil 58 andererseitsdie Möglichkeit geschaffen, das Roll-over-Ventil 58 unmittelbar auf das Ventilgehäuse 30a aufzuschweißen.

Bei der Ausführungsform nach Fig. 4-7 dagegen ist das Roll-over-Ventil 58 - wie gesagt - auf den Leitungsanschluß 57 aufgesteckt. Das Roll-over-Ventil 58 besteht zu diesem Zweck aus zwei Teilen, nämlich einmal einem unteren hülsenartigen Fortsatz 59 mit Flansch 60 und zum anderen aus einem oberen Gehäuseteil 61. Der obere Gehäuseteil 61 besitzt ebenfalls einen Flansch - mit 62 bezeichnet -, welcher mit dem Flansch 60 des unteren Hülsenteils 59 in Anlage kommt (vgl. insbesondere Fig. 6). Die beiden Flansche 62 und 60, und damit auch die beiden Teile 59, 61 des Roll-over-Ventils 58, sind zweckmäßigerweise miteinander verklebt oder verschweißt.

Innerhalb des oberen Teils 61 des Roll-over-Ventils 58 ist ein länglicher Ventilraum 63 ausgebildet, in dem eine Ventilkugel 64 angeordnet ist. Der Ventilraum 63 verengt sich nach oben hin konisch bis hin zu einem Ventilsitz 65. In Fig. 6 ist die Kugel 64 in strichpunktierten Linien in Position auf dem Ventilsitz 65 angedeutet. An dem unteren Teil 59 des Roll-over-Ventils 58 ist ein in den Ventilraum 63 hineinragender Zapfen 66 ausgebildet, der ein Verschließen der Durchgangsleitung 67 durch die Kugel 64 in Normallage des Fahrzeuges verhindert. Die in Fig. 6 in strichpunktierten Linien angedeutete Schließposition des Roll-over-Ventils, bei der sich die Kugel 64 auf dem Ventilsitz 65 befindet, kommt nur dann zustande, wenn das Fahrzeug eine extreme Schräg- oder Überkopflage einnimmt, ein Zustand, der z.B. nach einem Unfall auftreten kann. Normalerweise ist also das Roll-over-Ventil 58 stets geöffnet (vgl. Fig. 7).

Am oberen Ende des oberen Teils 61 des Roll-over-Ventils 58 ist - wie Fig. 7 zeigt - ein Leitungsanschluß 68 angeformt. Hier kann eine (nicht gezeigte) Be- und Entlüftungsleitung angeschlossen werden, welche die im Innern des Einfüllstutzens 11 bzw. des Kraftstoffbehälters 10 anfallenden Gase - vorzugsweise über einen Aktivkohlebehälter (nicht gezeigt) - an die Umgebungsatmosphäre ableitet.

Im übrigen arbeitet das aus Fig. 4 und 5 ersichtliche Ventil 35a wie folgt. Während des Betankungsvorganges, d.h. bei abgenommenem Tankdeckel, ragt die Kolbenstange 40 um den Betrag a aus dem Einfüllstutzen 11 heraus. Der Ventilkörper 39 wird durch die vorgespannte Druckfeder 42 in den Ventilsitz 38 gedrückt, und das Ventil 35a ist somit geschlossen. In dieser Position des Ventils 35a kann nur eine Füllentlüftung (vgl. hierzu obige Ausführungen) erfolgen. Nach Beendigung des Betankungsvorganges wird nun der Einfüllstutzen 11 durch den Tankdeckel (nicht gezeigt) verschlossen. Gleichzeitig erfolgt hierbei durch die Dichtung des Tankdeckels eine Betätigung der Kolbenstange 40, d.h. der Ventilkörper 39 wird vom Ventilsitz 38 abgehoben, und das Ventil 35a ist geöffnet. Bei dieser offenen Ventilstellung besteht nun eine direkte Verbindung zwischen dem Leitungskanal 52 und dem Innenraum des Einfüllstutzens 11. Die bei 53, 54 an das Ventilgehäuse 30a angeschlossenen Be- und Entlüftungsleitungen der Betriebsentlüftung vermögen nun die im Druckausgleichsraum 19 des Kraftstoffbehälters 10 (vgl. Fig. 1) angesammelten Gase über den Innenraum des Einfüllstutzens 11 in den zweiten Leitungskanal 56 des Ventilgehäuses 30a und von dort über das Roll-over-Ventil 58 - und ggf. einen Aktivkohlebehälter - in die Umgebungsatmosphäre zu transportieren.

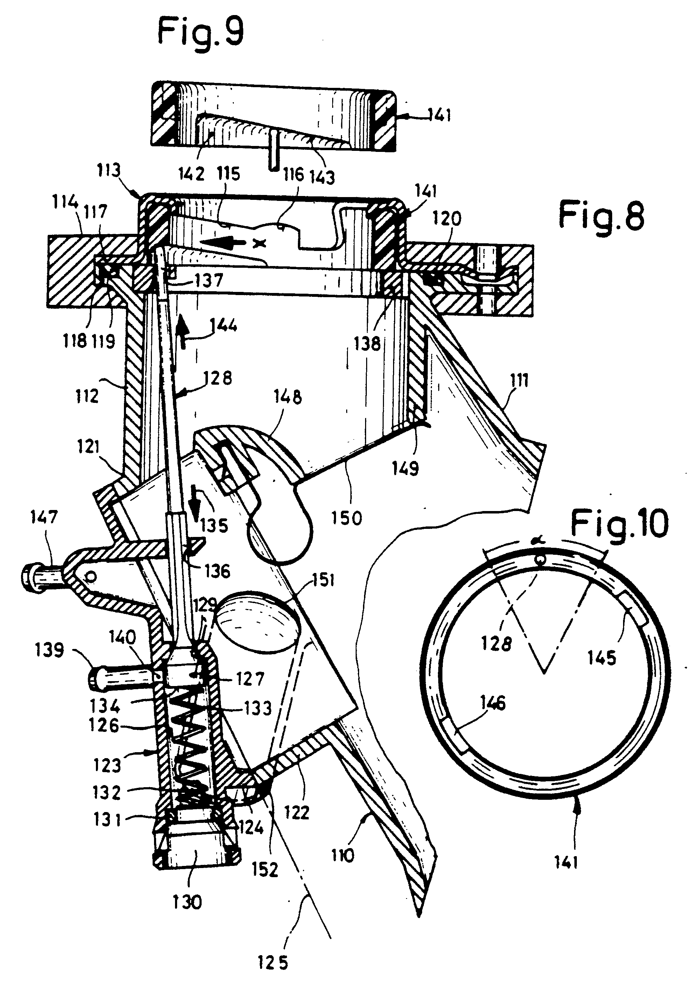

Die in den Fig. 8-10 und den nachstehenden Ausführungen verwendeten Bezugszeichen schließen in der Reihenfolge nicht unmittelbar an die Bezugszeichenfolge der Fig. 1-7 an, sondern beginnen erst mit der Zahl "110".

Nach Fig. 8 bezeichnet 110 insgesamt einen Einfüllstutzen eines Kraftstofftanks für Kraftfahrzeuge. Der Einfüllstutzen 110 besteht aus einem unteren Teil 111 und einem einstückig mit diesem verbundenen oberen Teil 112. Der obere Teil 112 ist gegenüber dem unteren Teil 111 in Richtung auf eine Horizontalebene abgewinkelt ausgebildet. An dem die Einfüllöffnung bildenden oberen Ende des Einfüllstutzens 110 ist stirnseitig ein Renksockel 113 mittels einer Spritzverbindung 114 befestigt. Der Renksockel 113 dient in bekannter Weise zur Aufnahme und dichtenden Halterung eines Tankdeckels (nicht gezeigt). Zu diesem Zweck weist der Renksockel 113 Anlaufschrägen 115 auf, die jeweils in eine Rastausnehmung 116 übergehen. Anlaufschrägen 115 und Rastausnehmungen 116 kooperieren in bekannter und daher nicht gezeigter Weise mit zwei diametral gegenüberliegenden Federzungen am nicht gezeigten Tankdeckel. Der Renksockel 113 besitzt einen seitlich nach außen abgebogenen Flansch 117, mit dem er stirnseitig an einem am oberen Teil 112 des Einfüllstutzens 110 ausgebildeten Flansch 118 anliegt. Für eine Abdichtung dieser Flanschverbindung 117, 118 sorgt eine als O-Ring ausgebildete Gummidichtung 119, die in einer stirnseitigen Nut 120 des Einfüllstutzen-Flansches 118 angeordnet ist.

Wie weiterhin aus Fig. 8 hervorgeht, ist am unteren Teil 111 des Einfüllstutzens 110 - unmittelbar unterhalb der Knickstelle 121 - im oben liegenden Bereich ein Anschlußteil 122 angeformt, an dem ein insgesamt mit 123 beziffertes Ventil befestigt ist. Das Ventil 123 besitzt zu diesem Zweck einen Ventildeckel 124, dessen Abmessungen den Abmessungen des Anschlußteils 122 entsprechen. Die Verbindung zwischen dem Anschlußteil 122 des Einfüllstutzens 110 und dem Ventil 123 erfolgt durch Verschweißen. Die Schweißebene ist hierbei mit 125 bezeichnet. Das Ventil 123 ist Bestandteil einer Be- und Entlüftungsvorrichtung, wie sie Gegenstand von Fig. 1 und 2 ist, auf die insoweit verwiesen werden kann (vgl. auch obige Beschreibung). Innerhalb des Ventils 123 ist ein zylindrischer Ventilraum 126 ausgebildet, innerhalb dessen das als Ventilkörper ausgebildete und mit 127 bezifferte rückwärtige Ende einer insgesamt mit 128 bezeichneten Ventil-Kolbenstange axial beweglich angeordnet ist. Der Ventilkörper 127 kooperiert mit einem am oberen Ende des Ventilraumes 26 ausgebildeten Ventilsitz 129. Das rückwärtige Ende des Ventilraumes 126 ist durch einen Verschlußstopfen 130 verschlossen und mittels einer als O-Ring ausgebildeten Gummidichtung 131 abgedichtet. An dem Verschlußstopfen 130 ist ein in den Ventilraum 126 hineinragender Zapfen 132 ausgebildet, der von einer Druckfeder 133 umgeben ist. Die Druckfeder 133 ist vorgespannt und stützt sich mit ihrem oberen Ende an der rückseitigen Stirnfläche 134 des Ventilkörpers 127 ab. Sie drückt hierbei den Ventilkörper 127 in die aus Fig. 8 ersichtliche Schließstellung. Eine Öffnung des Ventils 123, zu welchem Zweck die Kolbenstange 128 in Pfeilrichtung 135 bewegt werden muß, kann also nur gegen den Widerstand der Druckfeder 133 erfolgen.

Wie Fig. 8 desweiteren erkennen läßt, ist die Kolbenstange 128 an zwei weiteren Stellen - mit 136 und 137 bezeichnet - gelagert. Die Lagerstelle 136 wird hierbei von einem Teil des Ventilgehäuses selbst gebildet, wohingegen die zweite Lagerstelle 137 durch einen Ring 138 verkörpert wird, der am oberen Ende des oberen Einfüllstutzenteils 112 angeordnet ist.

Das Ventil 123 dient zur Steuerung der sog. Betriebsentlüftungsleitung, die - aus dem (nicht gezeigten) Kraftstofftank kommend - in einen Leitungsanschluß 139 des Ventilgehäuses einmündet. Die Verbindungsbohrung zwischen dem Leitungsanschluß 139 und dem Ventilraum 126 ist mit 140 beziffert. Wie bereits oben im Zusammenhang mit Fig. 1-4 erläutert, ist die Betriebsentlüftung nur bei aufgeschraubtem Tankdeckel in Tätigkeit. Bei abgeschraubtem Tankdeckel jedoch - dieser Zustand ist in Fig. 8 dargestellt - wird der Ventilkörper 127 durch die Druckfeder 133 in seine Schließstellung am Ventilsitz 129 bewegt, und die Betriebsentlüftung ist in dieser Stellung gesperrt. Um die Betriebsentlüftung 139 in Tätigkeit zu setzen ist daher, wie bereits oben angedeutet, das Ventil 127, 129 zu öffnen, d.h. die Kolbenstange 128 muß in Pfeilrichtung 135 bewegt werden. Um dies zu bewerkstelligen, ist innerhalb des Renksockels 113 ein Gleitring 141 drehbar angeordnet (vgl. hierzu auch Fig. 9 und 10). Wie insbesondere aus Fig. 9 ersichtlich ist, besitzt der Gleitring 141 an seiner rückwärtigen Stirnseite eine Aussparung 142, die von einer Schräge 143 begrenzt ist. Die Aussparung 142 bzw. Schräge 143 erstreckt sich in Umfangsrichtung - wie Fig. 10 erkennen läßt - über einen mit α bezeichneten Winkelbereich. Mittels der Schräge 143 steht der Gleitring 141 mit dem oberen Ende der Kolbenstange 128 in Wirkverbindung. Aufgrund der beschriebenen konstruktiven Gegebenheiten erfolgt eine Verschiebung der Kolbenstange 128 in axialer Richtung durch eine entsprechende Verdrehung des Gleitringes 141. Hierbei ist die Steigung der Schräge 143 so konzipiert, daß bei Verdrehung des Gleitringes 141 im Uhrzeigersinn eine Axialbewegung der Kolbenstange 128 in Pfeilrichtung 135, d.h. in Öffnungsrichtung des Ventils 123, 127, 129, erfolgt. Bei einer Drehung des Gleitringes 141 im Gegenuhrzeigersinn dagegen ist eine Axialbewegung der Kolbenstange 128 in umgekehrter Richtung, d.h. in Pfeilrichtung 144, möglich.

Zur Betätigung des Gleitringes 141 in der im vorstehenden beschriebenen Weise dient der in der Zeichnung nicht gezeigte Tankdeckel, und zwar während dieser auf den Renksockel 113 aufgeschraubt bzw. von diesem abgeschraubt wird. Der Gleitring 141 besitzt zu diesem Zweck - wie Fig. 10 zeigt - zwei diametral gegenüberliegende Aussparungen 145, 146, die mit den bereits erwähnten Federzungen des Tankdeckels kooperieren. Der Gleitring 141 wird also durch die Federzungen des Tankdeckels in Drehung versetzt. Beim Aufschrauben des Tankdeckels im Uhrzeigersinn wird also gemäß dem oben Gesagten der Gleitring 141 ebenfalls im Uhrzeigersinn gedreht und - als Folge davon - die Kolbenstange 128 in Pfeilrichtung 135 verschoben. Hierbei öffnet sich das Ventil 123, 127, 129, und die Betriebsentlüftung 139 kann in Tätigkeit treten. Umgekehrt wird beim Abschrauben des Tankdeckels von dem Renksockel 113 das Ventil 123 (127, 129) selbsttätig durch die vorgespannte Druckfeder 133 wieder geschlossen, so daß während des Einfüllvorganges des Kraftstoffes die Betriebsentlüftung 139 gesperrt bleibt.

Wie Fig. 8 weiterhin erkennen läßt, ist an dem Gehäuse des Ventils 123 noch ein weiterer Leitungsanschluß angeformt, der mit 147 bezeichnet ist. Hierbei handelt es sich um einen weiteren Bestandteil der bereits erwähnten Betriebsentlüftung. Der Anschluß 147 dient hierbei zur lösbaren Befestigung einer Schlauchleitung (nicht gezeigt), die zu einem Aktivkohlebehälter (ebenfalls nicht gezeigt) führt. Während also der bereits erwähnte Leitungsanschluß 139 zur Einleitung der aus dem Freiraum des Kraftstofftanks kommenden Kraftstoff-Luft-Dämpfe in den Ventilraum 126 dient, sorgt der Leitungsanschluß 147 für eine endgültige Ableitung dieses Gemisches aus dem Einfüllstutzen110 ins Freie, wobei es - wie gesagt - zur Reinigung vorher noch einen Aktivkohlebehälter durchströmt. Zwischen dem Leitungsanschluß 147 und dem Aktivkohlebehälter ist zweckmäßigerweise noch ein sog. Roll-over-Ventil zwischengeschaltet. Ein solches Roll-over-Ventil (vgl. hierzu Fig. 6 und 7) verhindert vorteilhaft das Auslaufen von Kraftstoff bei Schräglage des Fahrzeuges oder bei Dachlage (etwa infolge eines Unfalls). Im übrigen wird diesbezüglich auf die obigen Ausführungen zu Fig. 6 und 7 verwiesen.

Das Anschlußteil 122 des Einfüllstutzens 110 weist schließlich noch eine Öffnung 151 auf, an die außen ein Entlüftungsstutzen 152 angeformt ist. Der Entlüftungsstutzen 152 bildet den oberen Anschluß für eine Entlüftungsleitung (nicht gezeigt), die vom Kraftstofftank ihren Ausgang nimmt und dort die Füllhöhe bestimmt. Öffnung 151 und Entlüftungsstutzen 152 gehören also nicht zu der oben beschriebenen und mit 139, 147 bezeichneten (durch das Ventil 123 gesteuerten) Betriebsentlüftung, sondern stellen vielmehr die sog. Füllentlüftung dar. Die Funktionsweise einer derartigen Füllentlüftung ist oben (vgl. insbesondere die Ausführungen zu Fig. 1 und 2) ausführlich beschrieben, so daß sich hier weitere ins einzelne gehende Erörterungen erübrigen.

Aus Fig. 8 geht eine weitere Besonderheit des in Fig. 8-10 dargestellten Ausführungsbeispiels hervor. Sie besteht darin, daß innerhalb des oberen Einfüllstutzen-Teils 112 - an der Knickstelle 121 - ein durch Wandungen 148, 149 gebildeter Trichter ausgebildet ist. Der Trichter 148, 149 ist durch eine Federstahlklappe 150 verschließbar. Beim Betanken wird die Federstahlklappe 150 durch den in den Trichter 148, 149 eingeführten Zapfhahn entgegen ihrem Federwiderstand nach unten weggedrückt. Hierbei, bzw. während des Betankungsvorganges dient die Wandung des Trichters 148, 149 vorteilhafterweise zugleich als Schutzwand zur Abschirmung des Ventils 123, 127, 129 bzw. der Kolbenstange 128 vor eventuellen Beschädigungen durch den Zapfhahn.

Kraftstoffbehältern von Kraftfahrzeugen, wobei ein Teil (19) des Behältervolumens als Druckausgleichsraum im Hinblick auf Temperaturschwankungen dient, mit einer in den be- und entlüftbaren Einfüllstutzen einmündenden Be- und Entlüftungseinrichtung, die eine den noch als zulässig angesehenen maximalen Flüssigkeitsstand bestimmende Füllentlüftung und eine die Be- und Entlüftung des Druckausgleichsraumes übernehmende Betriebsentlüftung mit einer Schließvorrichtung aufweist, derart, daß die Betriebsentlüftung bei abgenommenem Tankdeckel durch Federwirkung verschlossen und bei aufgesetztem Tankdeckel durch diesen selbst entgegen der Federkraft geöffnet wird,
dadurch gekennzeichnet, daß zur Steuerung der Betriebsentlüftung ein in die Be- und Entlüftungsleitung (15, 16, 27; 139, 147) integriertes Ventil (35, 35a; 123, 127, 129) dient, dessen Ventilkörper (39; 127) gegen Federwiderstand (42; 133) durch eine Kolbenstange (40; 128) betätigbar ist, und daß das Ventil (35, 35a; 123, 127, 129) so im Einfüllstutzen (11; 110) angeordnet ist, daß die Kolbenstange (40; 128) parallel oder im wesentlichen parallel zur Wandung des Einfüllstutzens innerhalb desselben zu liegen kommt und mit ihrem freien Ende bei abgehobenem Tankdeckel (44) aus dem Einfüllstutzen herausragt.

2. Vorrichtung nach Anspruch 1,
dadurch gekennzeichnet, daß das Ventil (35, 35a; 123) in einem Ventilgehäuse (30 bzw. 30a) angeordnet ist, welches seitlich an dem eine entsprechende Ausnehmung (34) aufweisenden Einfüllstutzen (11; 110) an dessen oberen Ende, befestigt ist, derart, daß das Ventil mit seiner Kolbenstange (40; 128) innerhalb des Einfüllstutzens möglichst nahe an der Innenwandung desselben zu liegen kommt.

3. Vorrichtung nach Anspruch 1 oder 2,
dadurch gekennzeichnet, daß das obere Ende (112) des Einfüllstutzens (110) gegenüber dem sich an den Behälter anschließenden unteren Teil (111) des Einfüllstutzens in Richtung auf eine Horizontalebene abgewinkelt ausgebildet und die Kolbenstange (128) des Ventils (123, 127, 129) parallel oder im wesentlichen parallel zum oben liegenden Bereich der Wandung des abgewinkelten Einfüllstutzen-Endes (112) angeordnet ist (Fig. 8).

4. Vorrichtung nach Anspruch 3,
dadurch gekennzeichnet, daß das Ventil (123, 127, 129) am oben liegenden Bereich des Einfüllstutzens (110), unmittelbar vor der Knick-

**Ansprüche**

1. Vorrichtung zur Füllbegrenzung sowie zur Be- und Entlüftung von Behältern, insbesondere

stelle (121) desselben, angeordnet ist.

5. Vorrichtung nach einem oder mehreren der vorstehenden Ansprüche,
dadurch gekennzeichnet, daß das Ventil (35, 35a; 123, 127, 129) durch eine Schutzwand (49; 148) gegenüber dem beim Betanken den Zapfhahn aufnehmenden Innenraum des Einfüllstutzens (11; 110) abgeschirmt ist.

6. Vorrichtung nach einem oder mehreren der vorstehenden Ansprüche,
dadurch gekennzeichnet, daß das Ventil (35) zwei Kammern (36, 37) besitzt, von denen eine erste Kammer (36) durch eine Bohrung (47) einerseits mit dem Innenraum des Einfüllstutzens (11) und durch eine Leitung (48, 31, 32) andererseits mit der Umgebungsatmosphäre verbunden ist, und daß eine durch den Ventilkörper (39) zum Innenraum des Einfüllstutzens (11) hin verschließbare zweite Kammer (37) durch einen Leitungskanal (46) an die vom Behälter (z.B. 10 in Fig. 1 oder 2) kommende und in das Ventilgehäuse (30) einmündende Betriebsentlüftung (eine oder mehrere Be- und Entlüftungsleitungen, z.B. 15, 16, 27 in Fig. 1 oder 2) angeschlossen ist (Fig. 3).

7. Vorrichtung nach Anspruch 6,
dadurch gekennzeichnet, daß die die erste Kammer (36) mit der Umgebungsatmosphäre verbindende Leitung (46, 31, 32; 147) in einen zwischengeschalteten Aktivkohlebehälter zur Kraftstoffverdampfungskontrolle einmündet.

8. Vorrichtung nach Anspruch 6 oder 7,
dadurch gekennzeichnet, daß die beiden Kammern (36, 37) des Ventils (35) bei vom Ventilsitz (38) abgehobenem Ventilkörper (39) unmittelbar miteinander verbunden sind.

9. Vorrichtung nach einem oder mehreren der Ansprüche 1-5,
dadurch gekennzeichnet, daß das Ventil (35a; 123) eine einzige Kammer (51; 126) besitzt, die einerseits mit mindestens zwei, vorzugsweise drei, vom Behälter (z.B. 10 in Fig. 1 oder 2) ausgehenden und in das Ventilgehäuse (30a; 123) einmündenden Be- und Entlüftungsleitungen (z.B. Betriebsentlüftung 15, 16, 27 bzw. 139 in Fig. 1 oder 2 bzw. Fig. 8) über einen ersten Kanal (52; 140) verbunden ist und die andererseits eine durch den Ventilkörper (39; 127) gesteuerte Verbindung zum Innenraum des Einfüllstutzens (11; 110) aufweist, und daß der Innenraum des Einfüllstutzens über einen zweiten Kanal (56; 147) des Ventilgehäuses (30a; 123) - vorzugsweise über einen zwischengeschalteten Aktivkohlebehälter - mit der Umgebungsatmosphäre verbunden ist (Fig. 4, 5 und 8).

10. Vorrichtung nach einem oder mehreren der vorstehenden Ansprüche,
dadurch gekennzeichnet, daß in eine vom Ventilgehäuse (30, 30a; 123) ausgehende - vorzugsweise über einen Aktivkohlebehälter - in die Umgebungsatmosphäre führende Be- und Entlüftungsleitung (48, 31, 32 bzw. 56; 147) ein an sich bekanntes sog. Roll-over-Ventil (31 bzw. 58) zwischengeschaltet ist.

11. Vorrichtung nach Anspruch 10,
dadurch gekennzeichnet, daß das Roll-over-Ventil (31, 58) unmittelbar an dem Ventilgehäuse (30 bzw. 30a) befestigt und dadurch in das Ventil (35 bzw. 35a) integriert ist.

12. Vorrichtung nach einem oder mehreren der vorstehenden Ansprüche,
dadurch gekennzeichnet, daß das Ventilgehäuse (30, 30a; 123), einschließlich Kammern (36, 37, 51; 126) und Ventilsitz (38; 129), aus Kunststoff besteht, vorzugsweise als Kunststoff-Spritzgußteil ausgebildet ist.

13. Vorrichtung nach Anspruch 12,
dadurch gekennzeichnet, daß Kammern (36, 37, 51; 126), Leitungsanschlüsse (45, 53, 54, 57; 139, 147), Kanäle (46, 48, 52, 56) und Ventilsitz (38; 129) durch Spritzgießen gleichzeitig mit der Herstellung des Ventilgehäuses (30 bzw. 30a; 123) in dasselbe eingearbeitet sind.

14. Vorrichtung nach einem oder mehreren der vorstehenden Ansprüche, mit einem aus Kunststoff bestehenden Einfüllstutzen,
dadurch gekennzeichnet, daß das Ventilgehäuse (30a; 123) mit der Außenwand des Einfüllstutzens (11; 110) verschweißt ist (Fig. 4 und 8).

15. Vorrichtung nach einem oder mehreren der Ansprüche 10-14,
dadurch gekennzeichnet, daß das Roll-over-Ventil (31, 58) aus demselben Kunststoffmaterial wie das Ventilgehäuse (30, 30a) besteht und - wie letzteres - ebenfalls durch Spritzgießen hergestellt ist.

16. Vorrichtung nach einem oder mehreren der Ansprüche 10-15,
dadurch gekennzeichnet, daß das Roll-over-Ventil (58) einen hülsenartigen Fortsatz (59) besitzt, mit dem es auf einen Anschlußzapfen (57) des Ventilgehäuses (30a) aufgesteckt ist (Fig. 4, 6 und 7).

17. Vorrichtung nach Anspruch 15, dadurch gekennzeichnet, daß das Roll-over-Ventil auf das Ventilgehäuse aufgeschweißt ist.

18. Vorrichtung nach einem oder mehreren der vorstehenden Ansprüche, mit einem am Ende des Einfüllstutzens stirnseitig angeordneten sog. Renksockel zur Aufnahme und dichtenden Halterung des Tankdeckels, dadurch gekennzeichnet, daß der Renksockel (113) das aus dem Einfüllstutzen (110, 112) herausragende Ende der Kolbenstange (128) axial übergreift und nach außen hin abdeckt, und daß im Renksockel (113) ein Gleitring (141) drehbar gelagert ist, der an seiner rückwärtigen Stirnseite eine Aussparung (142) mit einer Schrägfläche (143) aufweist, die mit dem Ende der Ventil-Kolbenstange (128) in Wirkverbindung steht, und daß der Gleitring (141) durch den Tankdeckel - beim Auf- bzw. Abschrauben auf den (bzw. vom) Renksockel (113) - betätigbar ist (Fig. 8-10).

19. Vorrichtung nach Anspruch 18, wobei der Tankdeckel Federzungen besitzt, die mit Schrägflächen (115) und Rastausnehmungen (116) im Renksockel (113) kooperieren, dadurch gekennzeichnet, daß der Gleitring (141) Aussparungen (145, 146) für den Eingriff der Federzungen aufweist, derart, daß er durch die Federzungen während der Drehbewegung des Tankdeckels durch diesen in Drehung versetzbar ist.

20. Vorrichtung nach einem oder mehreren der vorstehenden Ansprüche, insbesondere nach Anspruch 5, dadurch gekennzeichnet, daß an der Knickstelle (121) zwischen oberem (112) und unterem Teil (111) des Einfüllstutzens (110) innerhalb desselben ein - vorzugsweise durch eine Federstahlklappe (150) verschließbarer - Trichter (148, 149) ausgebildet ist, dessen oben liegender Bereich (Wandung 148) zugleich als Schutzwand gegenüber dem beim Betanken den Zapfhahn aufnehmenden Innenraum des Einfüllstutzens (110) dient (Fig. 8).

## Claims

1. Device for limiting the filling of and for applying air to and removing it from containers, in particular fuel tanks of motor vehicles, in which a part (19) of the container volume serves as pressure equalizer chamber with regard to temperature variations, with a filler pipe through which air can be applied and removed and into which leads a device for applying and removing air which has an air remover which during filling determines the maximum fluid level still regarded as admissible and a service air remover for applying and removing air from the pressure equalizer chamber with a closure device, in such a way that the service air removal device is closed through the action of a spring when the fuel tank lid is removed and when the fuel tank lid is in place it is opened by the fuel tank lid itself against the action of a spring, characterised in that for controlling the service air removal device in the air application and removal pipe (15, 16, 27; 139, 147) is integrated a valve (35, 35a; 123, 127, 129) whose valve body (39; 127) can be operated against spring resistance (42; 133) by a piston rod (40; 128) and that the valve (35, 35a; 123, 127, 129) is arranged in the filler pipe (11; 110) in such a way that the piston rod (40; 128) comes to rest parallel to, or essentially parallel to, the wall of the filler pipe within the same and its exposed end protrudes from the filler pipe when the fuel tank lid (44) is raised.

2. Device according to claim 1, characterised in that the valve (35, 35a; 123) is arranged in a valve housing (30 or 30a) which is secured in a corresponding recess (34) on the side of the filler pipe (11; 110) at its upper end, (34), in such a way that the valve with its piston rod (40; 128) comes to rest within the filler pipe as close as possible to the inner wall of the same.

3. Device according to claim 1 or 2, characterised in that the upper end (112) of the filler pipe (110) opposite to the lower part (111) of the filler pipe adjacent to the container is constructed at an angle in the direction to a horizontal plane and the piston rod (128) of the valve (123, 127, 129) is arranged parallel to or essentially parallel to the upper region of the wall of the end of the bent filler pipe (112) (Fig. 8).

4. Device according to claim 3, characterised in that the valve (123, 127, 129) is arranged at the upper region of the filler pipe (110), directly in front of the bend (121) of the same.

5. Device according to at least one of the preceding claims,

characterised in that the valve (35, 35a; 123, 127, 129) is separated by a protective wall (49; 148) from the inner space of the filler pipe (11; 110) which receives the pump nozzle during filling.

6. Device according to at least one of the preceding claims,
characterised in that the valve (35) has two chambers (36, 37) of which a first chamber (36) through a drilling (47) is connected with the inner space of the filler pipe (11) on the one hand, and through a pipe (48, 31, 32) with the surrounding atmosphere on the other hand, and that a second chamber (37) which through the valve body (39) can be closed towards the inner space of the filler pipe (11) is connected through a conducting channel (46) to the service air remover (one or more air applicator and removal pipes, e.g. 15, 16, 27 in Fig. 1 or 2) coming from the container (e.g. 10 in Fig. 1 or 2) and leading into the valve housing (30) (Fig. 3).

7. Device according to claim 6,
characterised in that the first pipe (46, 31, 32; 147) connecting the first chamber (36) with the surrounding atmosphere leads into an interconnected activated charcoal container for controlling the fuel evaporation.

8. Device according to claim 6 or 7,
characterised in that the two chambers (36, 37) of the valve (35) are directly connected with each other when the valve body (39) is raised from the valve seat (38).

9. Device according to at least one of the preceding claims 1-5,
characterised in that the valve (35a; 123) has a single chamber (51; 126) which on the one hand via a first channel (52; 140) is connected with at least two, preferably three air applicator and removal pipes ( e.g. service air remover 15, 16, 27 or 139 in Fig. 1 or 2 or Fig. 8) originating from container (e.g. 10 in Fig. 1 or 2) and leading into the valve housing (30a; 123) and which on the other hand has a connection to the inner space of the filler pipe (11; 110) controlled by the valve body (39; 127), and that the inner space of the filler pipe is connected with the surrounding atmosphere (Fig. 4, 5 and 8) via a second channel (56; 147) of the valve housing (30a; 123) - preferably via an interconnected activated charcoal container.

10. Device according to at least one of the preceding claims,
characterised in that a known so-called roll-over-valve (31 or 58) is interconnected in an air applicator and removal pipe (48, 31, 32 or 56; 147) originating from valve housing (30, 30a; 123) and leading into the surrounding atmosphere - preferably via an activated charcoal container.

11. Device according to claim 10,
characterised in that the roll-over-valve (31, 58) is directly secured to the valve housing (30 or 30a) and thereby integrated in the valve (35 or 35a).

12. Device according to at least one of the preceding claims,
characterised in that the valve housing (30, 30a; 123), including the chambers (36, 37, 51; 126) and valve seat (38; 129), are made of plastics, preferably injection moulded plastics.

13. Device according to claim 12,
characterised in that chambers (36, 37, 51; 126), pipe connections (45, 53, 54, 57; 139, 147), channels (46, 48, 52, 56) and valve seat (38; 129) through injection moulding are worked into the valve housing (30 or 30a; 123) simultaneously during manufacture of the same.

14. Device according to at least one of the preceding claims, with a filler pipe made of plastics,
characterised in that the valve housing (30a; 123) is welded to the outer wall of the filler pipe (11; 110) (Fig. 4 and 8).

15. Device according to at least one of the preceding claims 10-14,
characterised in that the roll-over-valve (31, 58) consists of the same plastics material as the valve housing (30, 30a) and - like the latter - is also manufactured by injection moulding.

16. Device according to at least one of the preceding claims 10-15,
characterised in that the roll-over-valve (58) has a shell-like extension (59) through which it is force-fitted onto a connecting pin (57) of the valve housing (30a) (Fig. 4, 6 and 7).

17. Device according to claim 15,
characterised in that the roll-over-valve is welded to the valve housing.

18. Device according to at least one of the preceding claims, with a so-called bayonet socket for receiving and holding the fuel tank lid in a sealed manner,

characterised in that the bayonet socket (113) axially grips the end of the piston rod (128) protruding from the filler pipe (110, 112) and covers it externally, and that in the bayonet socket (113) a slip ring (141) is rotatably mounted, which at its rearward facing side has a recess (142) with a sloping surface (143) which is in operating contact with the end of the valve piston rod (128), and that the slip ring (141) can be operated through the fuel tank lid - when screwing it onto and off the bayonet socket (113) - (Fig. 8-10).

19. Device according to claim 18, in which the fuel tank lid has spring tongues cooperating with sloping surfaces (115) and notches (116) in the bayonet socket (113),

characterised in that the slip ring (141) has recesses (145, 146) for engagement by the spring tongues in such a way that it is turned by the spring tongues when the fuel tank lid is rotated.

20. Device according to at least one of the preceding claims, especially claim 5,

characterised in that at the bend (121) between the upper (112) and lower part (111) of the filler pipe (110) a funnel (148, 149) - preferably closable by a spring-like steel flap (150) - is constructed inside the filler pipe, the upper region (wall 148) of the funnel at the same time serves as protective wall against the inner space of the filler pipe (110) which receives the pump nozzle during filling. (Fig. 8).

**Revendications**

1. Dispositif de limitation du remplissage ainsi que d'aération et de dégazage de conteneurs, en particulier de réservoirs d'essence de véhicules à moteur, une partie (19) du volume du réservoir servant de chambre de compensation des variations de pression résultant de variations de température, comprenant un dispositif d'aération et de dégazage qui débouche dans la tubulure de remplissage pouvant être aérée et dégazée et présente une aération de remplissage déterminant le niveau de liquide maximal encore admissible et une aération de service assurant l'aération et le dégazage de la chambre de compensation de pression et comportant un dispositif d'obturation de telle sorte que l'aération de service soit fermée sous l'effet d'un ressort lorsque le bouchon du réservoir est enlevé et soit ouverte contre la force du ressort par le bouchon du réservoir lui-même lorsqu'il est en place, caractérisé en ce que la commande de l'aération de service se fait au moyen d'une soupape (35, 35a ; 123, 127, 129) qui est intégrée dans la conduite d'aération et de dégazage (15, 16, 27 ; 139, 147) et dont le corps de soupape (39 ; 127) peut être actionné par une tige de piston (40 ; 128) contre la résistance d'un ressort (42 ; 133) et en ce que la soupape (35, 35a ; 123, 127, 129) est disposée dans la tubulure de remplissage (11 ; 110) de telle manière que la tige de piston (40 ; 128) vienne se placer parallèlement ou essentiellement parallèlement à la paroi de la tubulure de remplissage à l'intérieur de ladite tubulure et dépasse avec son extrémité libre de la tubulure de remplissage lorsque le bouchon du réservoir (44) est enlevé.

2. Dispositif selon la revendication 1, caractérisé en ce que la soupape (35, 35a ; 123) est disposée dans un corps de soupape (30 ou 30a) qui est fixé latéralement sur l'extrémité supérieure de la tubulure de remplissage (11 ; 110) présentant un évidement correspondant (34) de telle manière que la soupape vienne avec sa tige de piston (40 ; 128) se placer à l'intérieur de la tubulure de remplissage le plus près possible de la paroi intérieure de ladite tubulure.

3. Dispositif selon la revendication 1 ou 2, caractérisé en ce que l'extrémité supérieure (112) de la tubulure de remplissage (110) est coudée en direction d'un plan horizontal par rapport à la partie inférieure (111) de la tubulure de remplissage qui se raccorde au réservoir et que la tige de piston (128) de la soupape (123, 127, 129) est disposée parallèlement ou essentiellement parallèlement à la zone se trouvant en haut de la paroi de l'extrémité coudée (112) de la tubulure de remplissage (fig. 8).

4. Dispositif selon la revendication 3, caractérisé en ce que la soupape (123, 127, 129) est disposée sur la zone se trouvant en haut de la tubulure de remplissage (110), juste avant le coude (121) de ladite tubulure.

5. Dispositif selon l'une ou plusieurs des revendications précédentes, caractérisé en ce que la soupape (35, 35a ; 123, 127, 129) est séparée par une paroi protectrice (49 ; 148) de l'espace intérieur de la tubulure de remplissage (11 ; 110) recevant le pistolet distributeur lors du remplissage du réservoir.

6. Dispositif selon l'une ou plusieurs des revendications précédentes, caractérisé en ce que la soupape (35) possède deux chambres (36, 37) dont la première (36) est reliée par un perçage (47) d'une part à l'espace intérieur de la tubulure de remplissage (11) et par une conduite (48, 31, 32) d'autre part à l'atmosphère environnante et en ce qu'une deuxième chambre (37) pouvant être fermée par le clapet de soupape (39) vers l'espace intérieur de la tubulure de remplissage (11) est raccordée par une conduite (46) à l'aération de service (une ou plusieurs conduites d'aération et de dégazage, par exemple 15, 16, 27 sur la fig. 1 ou 2) partant du réservoir (par exemple 10 sur la fig. 1 ou 2) et débouchant dans le corps de soupape (30) (fig. 3).

7. Dispositif selon la revendication 6, caractérisé en ce que la conduite (46, 31, 32 ; 147) reliant la première chambre (36) à l'atmosphère environnante débouche dans une capacité de charbon actif destinée au contrôle de l'évaporation du carburant.

8. Dispositif selon la revendication 6 ou 7, caractérisé en ce que les deux chambres (36, 37) de la soupape (35) communiquent directement entre elles lorsque le clapet de soupape (39) est soulevé du siège de soupape (38).

9. Dispositif selon l'une ou plusieurs des revendications 1 à 5, caractérisé en ce que la soupape (35a ; 123) possède une seule chambre (51 ; 125) qui est reliée d'une part par un premier canal (52 ; 140) à au moins deux, de préférence trois conduites d'aération et de dégazage (par exemple aération de service 15, 16, 27 ou 139 sur la fig. 1 ou 2 ou sur la fig. 8) partant du réservoir (par exemple 10 sur la fig. 1 ou 2) et débouchant dans le corps de soupape (30a ; 123) et présente d'autre part une liaison vers l'espace intérieur de la tubulure de remplissage (11 ; 110) commandée par le clapet de soupape (39 ; 127) et en ce que le volume intérieur de la tubulure de remplissage est relié à l'atmosphère environnante par un deuxième canal (56 ; 147) du corps de soupape (30a ; 123), de préférence par l'intermédiaire d'une capacité de charbon actif intercalée (fig. 4, 5 et 8).

10. Dispositif selon l'une ou plusieurs des revendications précédentes, caractérisé en ce qu'une soupape de sécurité en cas de retournement (31 ou 58) connue en elle-même est intercalée dans une conduite d'aération et de dégazage (48, 31, 32 ou 56 ; 147) partant du corps de soupape (30, 30a ; 123), et menant à l'atmosphère, de préférence par l'intermédiaire d'une capacité de charbon actif.

11. Dispositif selon la revendication 10, caractérisé en ce que la soupape de sécurité en cas de retournement (31, 58) est fixée directement sur le corps de soupape (30 ou 30a) et est ainsi intégrée dans la soupape (35 ou 35a).

12. Dispositif selon l'une ou plusieurs des revendications précédentes, caractérisé en ce que le corps de soupape (30, 30a ; 123), y compris les chambres (36, 37, 51 ; 126) et le siège de soupape (38 ; 129), est en matière plastique, et est de préférence constitué par une pièce en matière plastique moulée par injection.

13. Dispositif selon la revendication 12, caractérisé en ce que les chambres (36, 37, 51 ; 126), les raccords de conduites (45, 53, 54, 57 ; 139, 147), les conduites (46, 48, 52, 56) et le siège de soupape (38 ; 129) sont réalisés dans le corps de soupape (30 ou 30a ; 123) par moulage par injection lors de la fabrication dudit corps.

14. Dispositif selon l'une ou plusieurs des revendications précédentes, comprenant une tubulure de remplissage en matière plastique, caractérisé en ce que le corps de soupape (30a ; 123) est soudé sur la paroi extérieure de la tubulure de remplissage (11 ; 110) (fig. 4 et 8).

15. Dispositif selon l'une ou plusieurs des revendications 10 à 14, caractérisé en ce que la soupape de sécurité en cas de retournement (31, 58) est composée de la même matière plastique que le corps de soupape (30, 30a) et est fabriquée comme ce dernier par moulage par injection.

16. Dispositif selon l'une ou plusieurs des revendications 10 à 15, caractérisé en ce que la soupape de sécurité en cas de retournement (58) possède un prolongement en forme de manchon (59) avec lequel elle est emboîtée sur un embout de raccordement (57) du corps de soupape (30a) (fig. 4, 6 et 7).

17. Dispositif selon la revendication 15, caractérisé en ce que la soupape de sécurité en cas de retournement est soudée sur le corps de soupape.

18. Dispositif selon l'une ou plusieurs des revendications précédentes, comprenant un socle à baïonnettes disposé frontalement à l'extrémité de la tubulure de remplissage et destiné à recevoir et à supporter de manière étanche le bouchon du réservoir, caractérisé en ce que le socle à baïonnettes (113) passe axialement par dessus l'extrémité de la tige de piston (128) qui dépasse de la tubulure de remplissage (110, 112) et la recouvre vers l'extérieur et en ce qu'une bague de glissement (141) est montée rotative dans le socle à baïonnettes (113) et présente sur sa face frontale arrière un évidement (142) avec une surface inclinée (143) qui coopère avec l'extrémité de la tige de piston (128) de la soupape et en ce que la bague de glissement (141) peut être actionnée par le bouchon du réservoir lors du vissage sur le socle à baïonnettes (113) et du dévissage dudit socle (fig. 8 à 10).

19. Dispositif selon la revendication 18, le bouchon de réservoir possédant des languettes flexibles qui coopèrent avec des surfaces inclinées (115) et des évidements de blocage (116) dans le socle à baïonnettes (113), caractérisé en ce que la bague de glissement (141) présente des évidements (145, 146) pour la réception des languettes flexibles de telle manière que ladite bague puisse être entraînée en rotation par le bouchon par l'intermédiaire des languettes flexibles pendant la rotation du bouchon du réservoir.

20. Dispositif selon l'une ou plusieurs des revendications précédentes, en particulier selon la revendication 5, caractérisé en ce qu'au niveau du coude (121) entre la partie supérieure (112) et la partie inférieure (111) de la tubulure de remplissage (110), on a réalisé à l'intérieur de ladite tubulure un entonnoir (148, 149) qui peut de préférence être fermé par un clapet en acier à ressorts (150) et dont la zone se trouvant en haut (paroi 148) sert en même temps de paroi protectrice par rapport au volume intérieur de la tubulure de remplissage (110) recevant le pistolet distributeur lors du remplissage du réservoir (fig. 8).

EP 0 233 183 B1

Fig.1

Fig.2

Fig.3

Fig.4

Fig.5

Fig.6

Fig.7

# Fig.9

# Fig.8

# Fig.10